# EUROPEAN PATENT APPLICATION

(11) **EP 4 253 216 A1**
(43) Date of publication of application: **04.10.2023**
(21) Application number: 23165206.6
(22) Date of filing: 29.03.2023
(51) Int. Cl.: B62M 1/26, B62K 15/00, B62K 3/00

(54) **ANGLE VARIATION SYSTEM FOR ELLIPTICAL BIKES**

(30) Priority: 30.03.2022 BR 102022006059
(71) Applicant: Aruanã Energia S/A, 74696-015 Goiânia/GO (BR)
(72) Inventor: Brewer, Brian Ray, 13178-903 São Paulo (BR); McKinnon, Robert James, 13178-903 São Paulo (BR)
(74) Representative: Heuking Kühn Lüer Wojtek PartGmbB

(57) **Abstract**

The present invention relates to an elliptical bike comprising a function that the elliptical bikes of the prior art do not have, since their rear pulleys, which support the platforms, are screwed into protrusions welded to the frame, which have holes. The bicycle also comprises a folding embodiment, and said holes are suitable for raising and lowering the angle of attack of the platforms and the positioning of the rear pulleys (50), which are screwed into protrusions welded to the frame, provides four positions of angle of attack (P1, P2, P3, P4), giving the option to work different muscles in the user's legs.

## Description

### FIELD OF THE INVENTION

The present invention belongs to the field of elliptical bicycles, comprising a function that the elliptical bicycles of the prior art fail to provide, since their rear pulleys, which support the platforms, are screwed into protrusions welded to the frame, which have holes. These holes are suitable for raising and lowering the angle of the platforms, giving the option of working different muscles in the user's legs.

### BACKGROUND OF THE INVENTION

The use of bicycles, as is widely known, brings many benefits to the user, such as a fitness activity, the reduction of a sedentary lifestyle and diseases, the fight against obesity, among other pathologies, in addition to being an alternative and environmentally friendly means of transportation, reducing the levels of polluting gases of conventional vehicles.

Several types of bicycle models are known, such as mountain bikes, hybrid bicycles, touring and leisure bicycles, bicycles with front suspension, among others, which, in general, are composed of monobloc frames where the front and rear forks are installed, as well as wheels and tires, ratchet, movement transmission mechanism, saddle, handlebars, brake mechanism, in addition to other equipment such as basket, car seat, etc.

Likewise, "elliptical" bicycles are also known; they promote all the benefits already mentioned of the common bicycle in a different way: emulating the human step, through its elliptical movement, being a natural way of ambulating the human body, without the impact associated with running that can cause damage to the muscles and tissues of connection between muscles and bones.

Elliptical bicycles, unlike normal bicycles, help in the development of different parts of the musculature, since the way the user uses the bicycle is "standing" and not "sitting" as in the common bicycle, that is, the user supports the feet on platforms, remaining upright while driving the bike, completely dispensing with the use of saddles.

More specifically, an elliptical bike consists of a structural frame with at least two wheels, one front and one rear, and includes a mechanism for activating a crankset associated with the ratchet by means of the belt and where a pedal crank is driven by a pair of platforms, each of which has one end mounted on a crank arm and the other end articulated to the respective support arranged at the rear of the frame, close to the rear wheel. Thus, the alternating movement of the platforms between raising and lowering each support platform promotes forward movement of the bicycle.

The applicant, acting in the area as a developer of mechanisms for elliptical bicycles and the like, is the applicant for document BR102012028693, which refers to a bicycle whose drive assembly allows it to be driven by the cyclist in the upright position and, therefore, provides that each of the pedals is articulated by its front end, at the ends of the respective cranks ; each of the pedals is continued on a guide rod; the guide rods are, in turn, supported on the rear set of the sliding supports, whose set is formed by a transverse tube incorporated horizontally to the structure and receiving, at each of its ends, a roller whose channel is sized to accommodate the crossbeam section of the guide rod.

Document BR10201302584, in turn, refers to an elliptical velocipede such as bicycles, tricycles and scooters with a tubular spar where the basic parts are mounted, namely: fork, handlebar support, front wheel, rear wheel, central crown, cranks, as well as the elliptical drive mechanism and steering mechanism.

Document BR102017003989 also teaches an elliptical bicycle model, where a structural frame composed of two spars in opposite arcs, one upper and one lower, a front wheel and a rear wheel driven by a crank of their support platforms, as well as a box consisting of a fork, steerer tube and handlebar. The elliptical trainer according to this document has several hinges. The structural frame is supplied with a set of main hinges, each applied to a split spar pivoting at an approximate angle of up to 170°. A secondary hinge is applied to a split handlebar head tube with a hinge at an approximate angle of up to 180°. A set of tertiary hinges are fitted between a crankset and the user's footrest platforms, each of which pivots at an approximate angle of up to 90° upwards.

Other models of elliptical bikes are known on the market, as this type of bike has become an increasingly common vehicle, but although these models of "elliptical" bikes bring countless benefits to users, it is worth noting that none of them teaches the possibility to raise and lower the angle of attack of the platforms, giving the option of working different muscles in the legs.

### SUMMARY OF THE INVENTION

The set according to the present invention applies to an elliptical bike which has a function that others do not: the rear pulleys that support the platforms are screwed into welded protrusions on the frame, which have holes. Such holes can be used to raise and lower the angle of attack of the platforms, giving the option to work different muscles in the legs. In a second embodiment, the elliptical bike is foldable.

### BRIEF DESCRIPTION OF THE DRAWINGS

Complementing the present description, in order to obtain a better understanding of the characteristics of the present invention and in accordance with a preferred practical embodiment of the same, the present application presents a set of attached drawings, where, by way of example, although not limiting, its operation was represented:

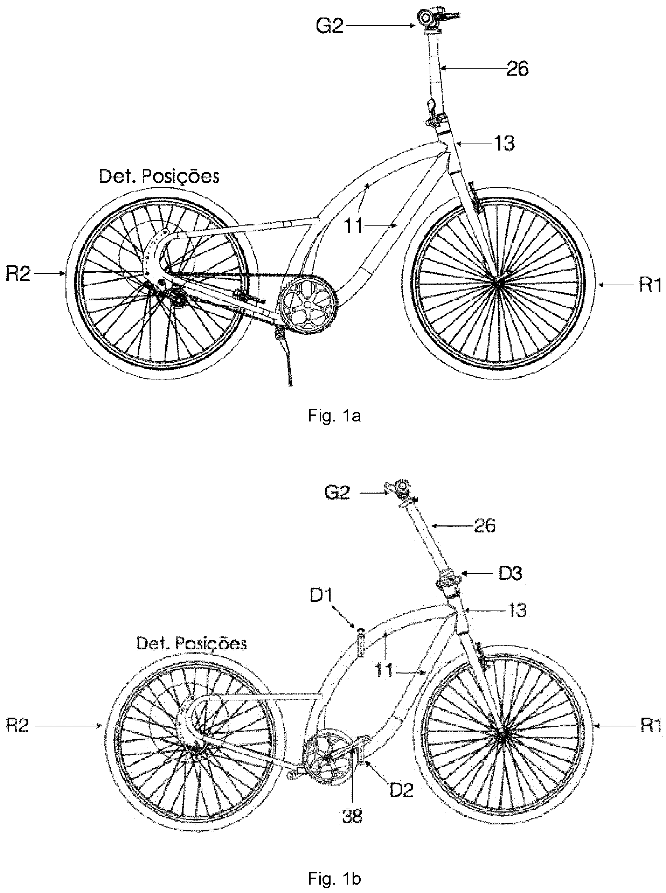

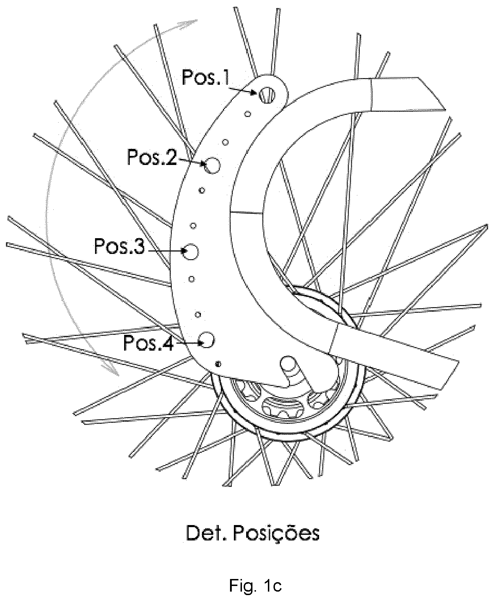

Figure 1a illustrates the elliptical bike exerciser assembly according to the present invention, Figure 1b illustrates the assembly in folding elliptical bike exerciser mode, and Figure 1c emphasizes the four anticipated angle positions;

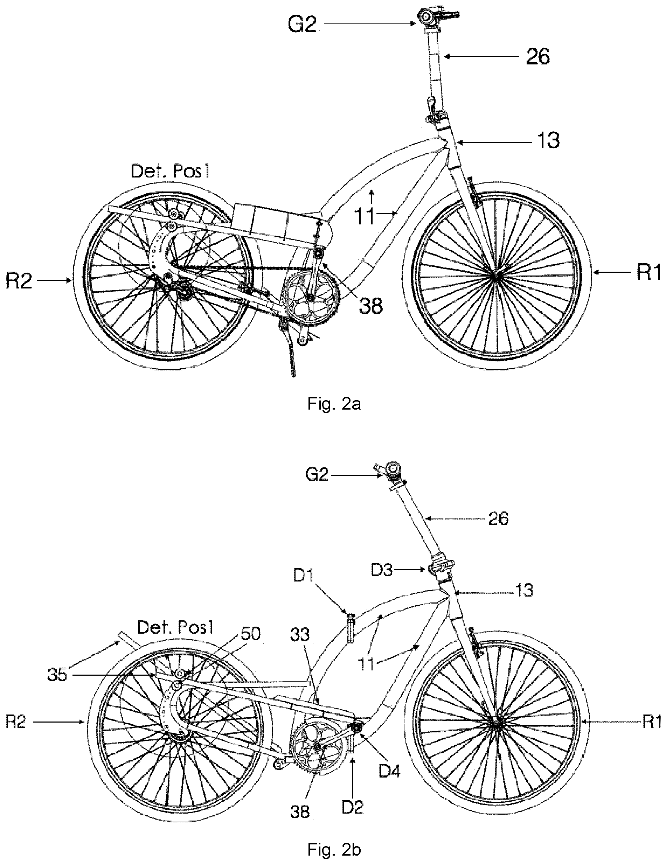

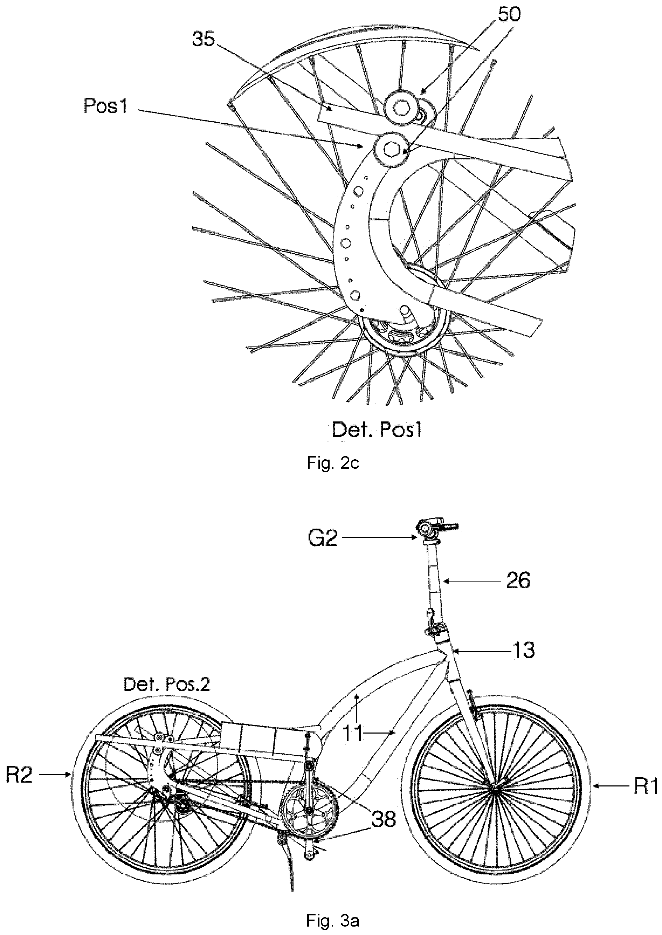

Figure 2a illustrates the elliptical bike exerciser assembly according to the present invention, Figure 2b illustrates the assembly in folding elliptical bike exerciser mode, and Figure 2c emphasizes the first predicted angle position (Fig. 2a);

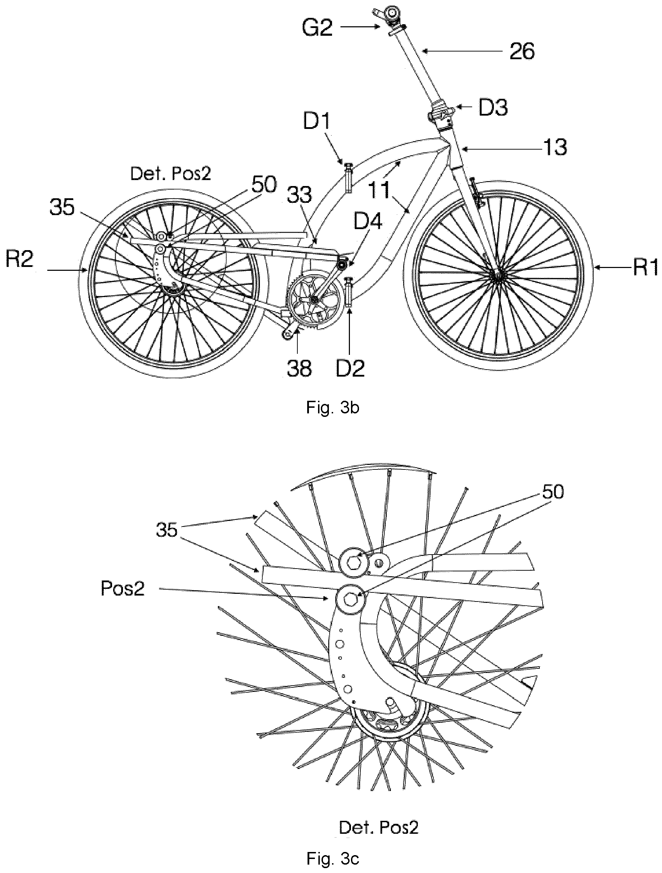

Figure 3a illustrates the elliptical bike exerciser assembly according to the present invention, Figure 3b illustrates the assembly in folding elliptical bike exerciser mode, and Figure 3c emphasizes the second predicted angle position;

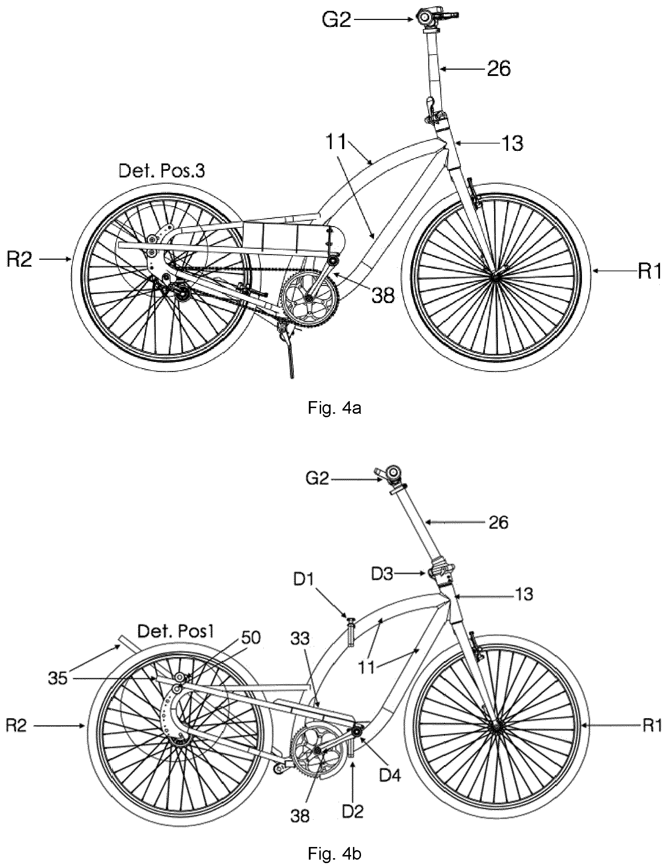

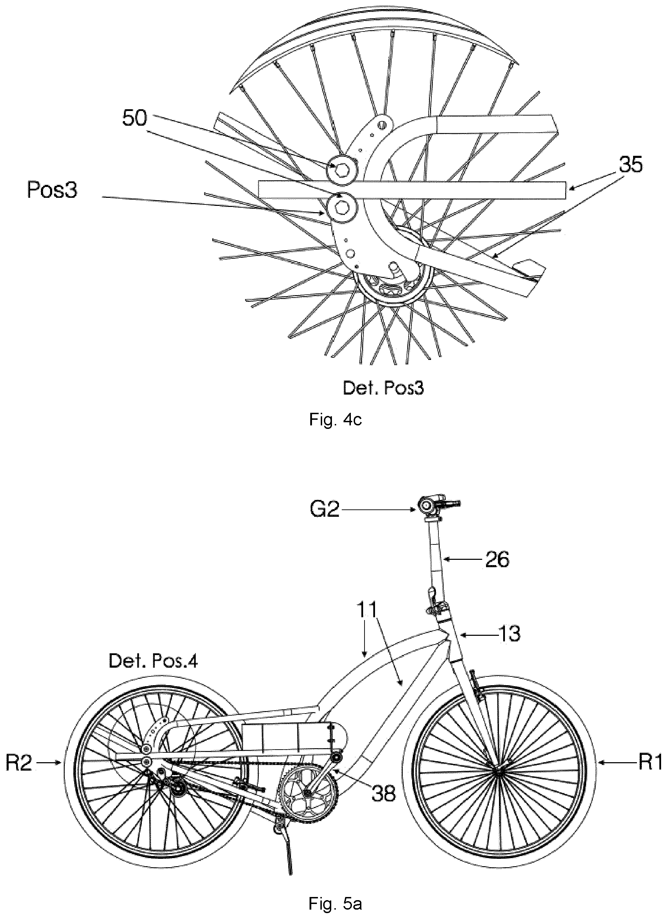

Figure 4a illustrates the elliptical bike exerciser assembly according to the present invention, Figure 4b illustrates the assembly in folding elliptical bike exerciser mode, and Figure 4c emphasizes the third predicted angle position; and

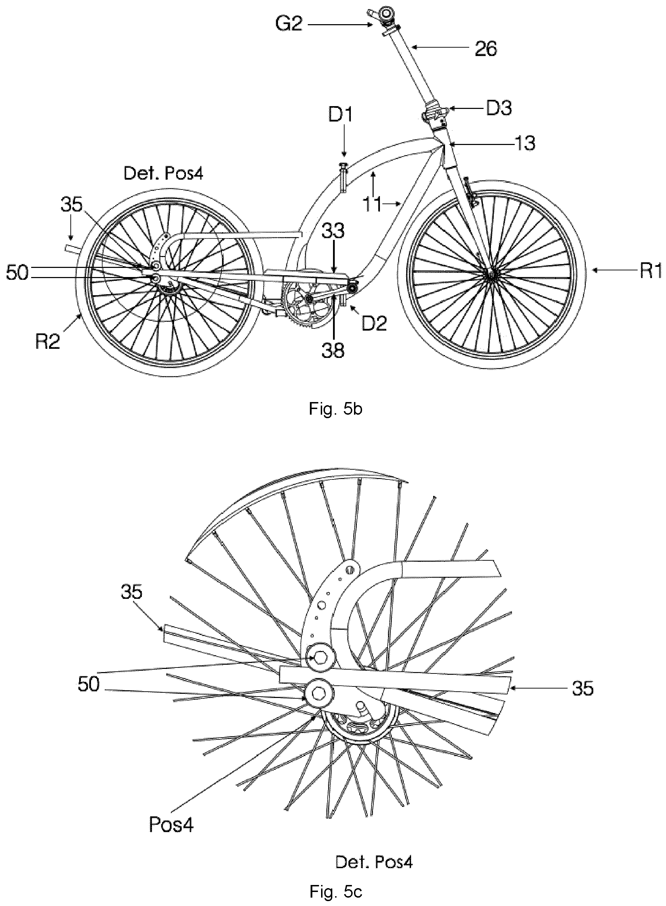

Figure 5a illustrates the elliptical bike exerciser assembly according to the present invention, Figure 5b illustrates the assembly in folding elliptical bike exerciser mode, and Figure 5c emphasizes the predicted fourth angle position.

### DETAILED DESCRIPTION OF THE INVENTION

With reference to the illustrated drawings, the present invention relates to an elliptical bike comprising a function that the elliptical bikes of the prior art do not have, since their rear pulleys, which support the platforms, are screwed in protrusions welded in the frame, which have holes. These holes are suitable for raising and lowering the angle of attack of the platforms, giving the option of working different muscles in the user's legs.

It is also worth mentioning that the elliptical bike according to the present invention can be presented in a folding mode and, with that, still brings a great advantage in terms of transportability.

In the folding mode, the frame (11) of the bicycle according to the present invention has its front part coupled to a tubular segment (13) responsible for supporting the fork (G1) of the front wheel (R1) and the steering tube (26) of the handlebar (G2), this steering tube (26) being bipartite and joined by the secondary hinge (D3) with 180° articulation.

The other end of the frame (11) is joined to the bearing of the tubular segment (35) of a crank which, in turn, through each rod (38), has a respective tertiary hinge (D4), responsible for articulating a bar (35) of the support platform (33) at an angle of 90°, the support bar (35) having its other end installed in a pair of double pulleys (50) arranged in the region of the rear wheel (R2). More specifically the rear pulleys (50) are screwed into welded protrusions on the frame, which have appropriate holes for four angle of attack positions (P1, P2, P3, P4).

The hinges (D1), (D2), (D3) and (D4), when disassembled, allow the elliptical bike to be reduced by up to ⅓ of its volume. The association of all joints resulting from hinges (D1), (D2), (D3) and (D4) comprises the dimensional compaction of the elliptical bicycle (10).

In the conventional elliptical mode, the frame (11) of the bicycle according to the present invention has its front part coupled to a tubular segment (13) responsible for supporting the fork (G1) of the front wheel (R1) and the steering tube (26) of the handlebar (G2).

The other end of the frame (11) joins the bearing of the tubular segment (35) of a crank in which, in turn, the support bar (35) has one end installed on a pair of double pulleys (50) arranged in the region of the rear wheel (R2). More specifically, the rear pulleys (50) are screwed into welded protrusions on the frame, which have appropriate holes for four angle of attack positions (P1, P2, P3, P4).

In both embodiments, the positioning of the rear pulleys (50), which are screwed into welded protuberances on the frame, provides four angle of attack positions (P1, P2, P3, P4).

In the first position, the rear pulleys (50) are screwed in position P1 of the welded protuberances on the frame, having the most acute angle of inclination. In the second position, the rear pulleys (50) are screwed in position P2 of the protrusions welded to the frame, with an intermediate angle of inclination, just as when the rear pulleys (50) are screwed in position P3 of the protrusions welded to the frame, which lead to a second intermediate angle of inclination. But when the rear pulleys (50) are screwed in position P4 of the protrusions welded to the frame, the smoothest possible angle of inclination is obtained. The different angle allows the option to work different muscles in the user's legs.

It is important to point out that, when the present invention is put into practice, modifications can be made in relation to certain construction and form details, without evasion from the fundamental principles that are clearly founded in the context of the claims, it being understood that the terminology employed is not intended to limit the invention.

## Claims

1. Elliptical bike (10) comprising:
a frame (11) whose front part is coupled to a tubular segment (13) responsible for supporting the fork (G1) of the front wheel (R1) and the steering tube (26) of the handlebars (G2), said steering tube (26) can be bipartite (or not) and in which the other end of the frame (11) joins the bearing of a tubular segment (35) of a crank in which,
in turn, the support bar (35) has one end installed on a pair of double pulleys (50) arranged in the region of the rear wheel (R2),
**wherein** the rear pulleys (50) are screwed into welded protrusions on the frame (P1, P2, P3, P4), with four possible angle of attack positions.

2. Folding elliptical bike (10) comprising:
a frame (11) whose front part is coupled to a tubular segment (13) responsible for supporting the fork (G1) of the front wheel (R1) and the steering tube (26) of the handlebars (G2), said steering tube (26) can be bipartite (or not) and joined by a secondary hinge (D3) with 180° articulation and in which the other end of the frame (11) joins the bearing of a tubular segment (35) of a crank that, in turn, through each rod (38), has a respective tertiary hinge (D4), responsible for articulating a bar (35) of a support platform (33) at an angle of 90°, the support bar (35) having its other end installed in a pair of double pulleys (50) arranged in the region of the rear wheel (R2),
**wherein** the rear pulleys (50) are screwed into welded protuberances on the frame (P1, P2, P3, P4), with four possible angle of attack positions.

3. Elliptical bike, according to any one of claims 1 or 2, **wherein** the rear pulleys (50) are screwed in position P1 of the protrusions welded to the frame, with the most acute angle of inclination possible.

4. Elliptical bike, according to any one of claims 1 or 2, **wherein** the rear pulleys (50) are screwed in position P2 of the protrusions welded to the frame.

5. Elliptical bike, according to any one of claims 1 or 2, **wherein** the rear pulleys (50) are screwed in position P3 of the protrusions welded to the frame.

6. Elliptical bike, according to any one of claims 1 or 2, **wherein** the rear pulleys (50) are screwed in position P4 of the protrusions welded to the frame, with the smoothest angle of inclination possible.
